# EUROPEAN PATENT APPLICATION

(11) **EP 1 770 748 A1**
(43) Date of publication of application: **04.04.2007**
(21) Application number: 06121492.0
(22) Date of filing: 29.09.2006
(51) Int. Cl.: H01J 17/49

(54) **Flat display panel and its method of manufacture**

(30) Priority: 29.09.2005 KR 20050091052
(71) Applicant: Samsung SDI Co., Ltd., Suwon-si Gyeonggi-do (KR)
(72) Inventor: Shin, Hyea-Weon, Kiheung-gu Yongin-si Kyunggi-do (KR); Kim, Yong-Seog, Kiheung-gu Yongin-si Kyunggi-do (KR)
(74) Representative: Walaski, Jan Filip

(57) **Abstract**

The flat display of the present invention includes a first substrate and a second substrate arranged opposite to each other, barrier ribs that are disposed in a space between the first substrate and the second substrate and that divide a discharge space to define partitioned discharge spaces, a phosphor layer disposed inside the partitioned discharge spaces, address electrodes disposed on the second substrate in one direction, a second dielectric layer disposed to cover the address electrodes on the second substrate, at least a pair of display electrodes that are disposed on the first substrate in a direction crossing the address electrodes and arranged opposite to each other in each partitioned discharge space, and a first dielectric layer disposed to cover the display electrodes on the first substrate. A carbon-based material is disposed to extend from first dielectric layer toward the discharge space.

## Description

The present invention relates to a flat panel display, particularly to a flat display panel with excellent brightness characteristics and luminous efficiency, and low discharge voltages, and its method of manufacture.

Displays are largely divided into Cathode Ray Tubes (CRTs) and Flat Display Panels (FDPs). Since the FDP is thin, portable, and consumes less power compared to a CRT, a so-called Braun Tube, it is emerging as a representative display that can substitute for the Braun Tube.

FDPs include Liquid Crystal Displays (LCDs), Plasma Display Panels (PDPs), and Field Emission Displays (FEDs). While it is difficult to form a large screen with an LCD, this can be done with a PDP. An LCD is provided with a Photo Multiplier Tube (PMT) that can improve brightness as well as complementing drawbacks of the LCD, and an optical amplification device such as a Micro Channel Plate (MCP).

A PDP is a display that forms images by using red (R), green (G), and blue (B) visible light generated by vacuum ultra-violet (VUV) rays radiated from plasma obtained through a gas discharge exciting phosphors.

Since a PDP that is thinner than 10cm can realize an ultra-large screen of more than 60 inches (152cm) and is a self-light-emitting display, as is a CRT, it does not have a screen distortion phenomenon in which the screen is distorted according to a viewing angle, and it has colour reproducibility. Also, since the manufacturing process of a PDP is simple compared to that of an LCD, it has been spotlighted as a television (TV) and an industrial flat panel display with advantages with respect to productivity and production costs.

A PDP is required to have improved brightness by increasing a secondary electron emission when ions separated by a plasma collide with each other in a discharge space. To this end, researchers are developing technologies using carbon nanotubes.

Korean Laid-open Publication No. 2001-0077686 discloses a flat panel display that can maximize the emission of secondary electrons, and forms a secondary electron amplifying structure by using carbon nanotubes to improve brightness and decrease a driving voltage. Also, Korean Laid-open Publication No. 2002-0036888 discloses a flat panel display including an electron amplification stack using carbon nanotubes, and a manufacturing method thereof.

One embodiment of the present invention provides a flat panel display having advantages of excellent brightness characteristics and low driving voltage.

Another embodiment of the present invention provides a method of manufacturing the flat panel display.

According to an embodiment of the present invention, a flat display is provided including: a first substrate and a second substrate arranged opposite to each other; barrier ribs arranged in a space between the first substrate and the second substrate and dividing a discharge space to define partitioned discharge spaces; a phosphor layer arranged inside the partitioned discharge spaces; address electrodes arranged on the second substrate in one direction; a second dielectric layer arranged to cover the address electrodes on the second substrate; at least a pair of display electrodes arranged on the first substrate in a direction crossing the address electrodes and opposite to each other in each partitioned discharge space; a first dielectric layer arranged to cover the display electrodes on the first substrate; and a carbon-based material arranged to extend from the first dielectric layer toward the discharge space.

The carbon-based material is preferably included in an amount of less than or equal to 40 wt% based on the total weight of the first dielectric layer. The carbon-based material is preferably arranged on an entire surface of the first dielectric layer. The carbon-based material is preferably arranged on the first dielectric layer in areas corresponding to areas where the display electrodes are arranged. The carbon-based material is preferably arranged to extend out of the first dielectric layer. The carbon-based material is preferably grown to extend from the first dielectric layer toward the discharge space using a planting method. The carbon-based material is preferably selected from a group consisting of carbon nanotubes, graphite nanofibers, carbon nanofibers, carbon nanotips, diamonds, and combinations thereof.

The flat panel display preferably further includes the carbon-based material having a coating of at least one material selected from a group consisting of fluorides, oxides, and combinations thereof.

The flat panel display preferably further includes at least one protection layer arranged on the first dielectric layer, the at least one protection layer selected from a group consisting of fluoride layers, oxide layers, and combinations thereof.

The carbon-based material is preferably arranged to extend out of the protection layer.

The protection layer preferably includes at least one material selected from a group consisting of MgO, MgF₂, CaF₂, LiF, Al₂O₃, ZnO, CaO, SrO, SiO₂, La₂O₃, and combinations thereof.

The flat panel display preferably includes a Plasma Display Panel (PDP).

According to another embodiment of the present invention, a method of manufacturing a flat panel display is provided, the method including: forming display electrodes on a first substrate; coating a composition for a dielectric layer and then preheating to form a first dielectric layer covering the display electrodes on the first substrate; growing a carbon-based material toward a discharge space on the first dielectric layer and then firing the first substrate; forming address electrodes on a second substrate; forming a second dielectric layer covering the address electrodes on the second substrate; forming barrier ribs for partitioning a discharge space to define partitioned discharge spaces on the second dielectric layer between the address electrodes; and forming a phosphor layer in the partitioned discharge spaces, and facing the first substrate and the second substrate to each other, exhausting air therebetween, and sealing them together.

The preheating is preferably performed in a range of from 430 to 480°C.

The carbon-based material is preferably grown from the first dielectric layer to extend toward the discharge space using a planting method.

The firing is preferably performed in a range of from 520 to 600°C. The firing is preferably performed in an oxygen atmosphere.

The method preferably further includes forming at least one protection layer on the first dielectric layer, the at least one protection layer selected from a group consisting of fluoride layers, oxide layers, and combinations thereof.

Embodiments of the invention will now be described by way of example with reference to the accompanying drawings, in which:
FIG. 1 is a perspective view of a flat panel display in accordance with an embodiment of the present invention;
FIGS. 2 and 3 are cross-sectional views taken along the line II-II of FIG. 1; and
FIGS. 4A to 4D are Scanning Electron Microscope (SEM) photographs of dielectric layers of Plasma Display Panels (PDPₛ) according to Examples 1 to 4.

An exemplary embodiment of the present invention is described in detail hereinafter with reference to the accompanying drawings.

A flat panel display displays images by effecting a discharge in a plasma discharge space formed by barrier ribs on substrates. During the process, a protection layer including MgO emits secondary electrons into the discharge space to increase efficiency. By doing so, it reduces a discharge voltage supplied between electrodes and protects the electrodes inside a panel. However, protection layers used in current flat panel displays have a low secondary electron emission coefficient, which leads to a low secondary electron amplification rate, increased voltage, and poor brightness.

To improve the brightness by increasing the secondary electron emission when ions separated by a plasma collide with each other in a discharge space of a PDP, carbon nanotubes are used.

Carbon nanotubes have a high aspect ratio, a length of several microns (µm) with a diameter of several nanometers (nm), and properties of a metal or a semiconductor. Thus, an electric field tends to concentrate on line ends of the carbon nanotubes. Also, carbon nanotubes have a low resistance, and the low resistance induces many electrons to be emitted. Thus, even though a low operation voltage is supplied to the electrodes, a substantial plasma discharge is obtained just as if a high electric field was supplied, and the formed discharge is easily stabilized. Also, carbon nanotubes have high mechanical strength, high chemical tolerance, and a long lifespan. As described above, when a secondary electron amplification means such as carbon nanotubes is applied to a Plasma Display Panel (PDP), the coefficient of secondary electron emission caused by ions in the PDP is increased. Thus, the PDP can acquire excellent brightness characteristics and high light-emitting efficiency and have a reduced discharge voltage, specifically, a reduced address voltage. Accordingly, it is possible to reduce power consumption and driving voltage of a driver Integrated Circuit (IC), and this allows the PDP to use an inexpensive low-power IC. Eventually, the secondary electron amplification means makes it possible to manufacture a flat panel display at a low cost.

However, it is difficult to tightly plant carbon nanotubes in a panel. If the carbon nanotubes are not tightly planted, the carbon nanotubes can separate during discharge resulting in an increase of foreign materials.

According to one embodiment of the present invention, a first dielectric layer is preheated, and then a carbon-based material is grown toward a discharge space followed by firing during manufacture of a flat panel display. By performing the preheating, micropores are formed in the first dielectric layer and the carbon-based material is put in the micropores to be tightly fixed to the panel. Thus, the carbon-based material can be prevented from separating during discharge and electron emission can be maximized resulting in an improvement in the brightness and efficiency of a plasma display panel, and a decrease of a discharge sustain voltage. In short, a flat panel display suggested in a first embodiment of the present invention includes a first substrate and a second substrate arranged opposite to each other; barrier ribs partitioning a discharge space between the first substrate and the second substrate; a phosphor layer disposed inside of each partitioned discharge space; address electrodes disposed on the second substrate in one direction; a second dielectric layer disposed on the second substrate to cover the address electrodes; display electrodes disposed on the first substrate along a direction crossing the address electrodes, wherein at least a pair of the display electrodes are disposed facing each other in each of the partitioned discharge spaces; a first dielectric layer disposed on the first substrate to cover the display electrodes, and a carbon-based material is disposed toward the discharge space.

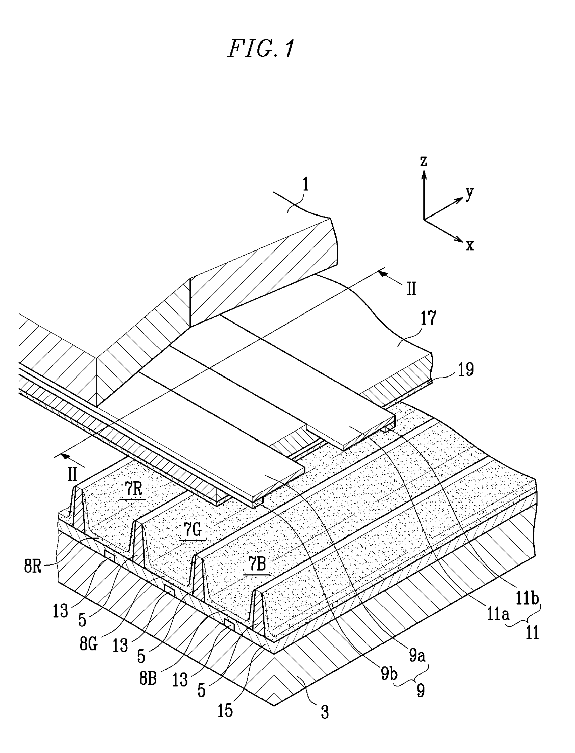

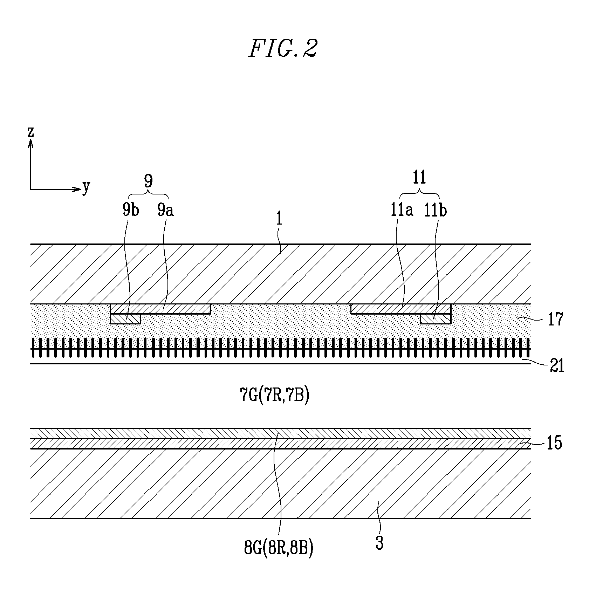

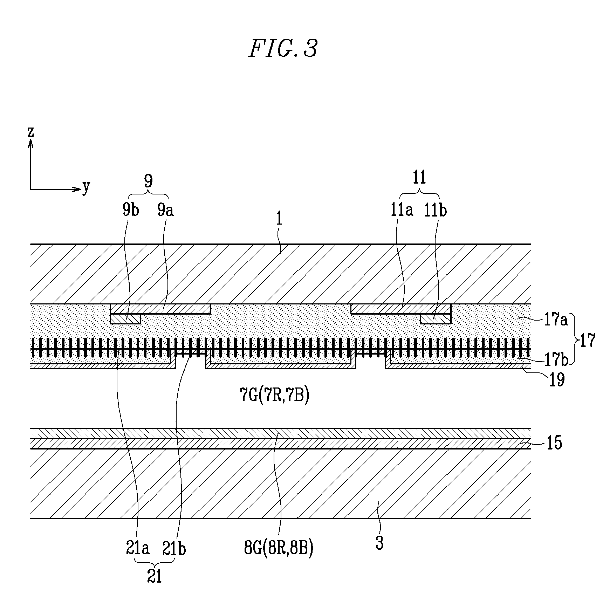

FIG. 1 is an exploded perspective view of a flat panel display in accordance with an embodiment of the present invention. FIGS. 2 and 3 are a cross-sectional view taken along the line II-II of FIG. 1.

Referring to the drawings, the flat panel display includes a first substrate (which will be referred to as a front substrate hereinafter) and a second substrate (which will be referred to as a rear substrate hereinafter) facing each other, and a discharge gas filling a space between the front substrate 1 and the rear substrate 3. A plurality of barrier ribs are arranged in the space between the front substrate 1 and the rear substrate 3 to form a plurality of partitioned discharge spaces 7R, 7G, and 7B. The discharge spaces 7R, 7G, and 7B respectively include red (R), green (G), and blue (B) phosphors.

Display electrodes 9 and 11 are disposed along an x-axis direction in the front substrate 1, and the display electrodes 9 and 11 are positioned at an interval corresponding to the partitioned discharge spaces 7R, 7G, and 7B in a y-axis direction. Address electrodes 13 are disposed on the rear substrate 3 along the y-axis direction in the drawing, crossing the display electrodes 9 and 11, and the address electrodes 13 are positioned at an interval corresponding to the partitioned discharge spaces 7R, 7G, and 7B in the α-axis direction of the drawing. The display electrodes 9 and 11 and the address electrodes 13 are arranged in a structure crossing and corresponding to the partitioned discharge spaces 7R, 7G, and 7B.

As described above, the barrier ribs 5 disposed between the front substrate 1 and the rear substrate 3 are arranged in parallel to the other adjacent barrier ribs 5, and the front substrate 1 and the rear substrate 3 are arranged with a predetermined space therebetween to thereby form the partitioned discharge spaces 7R, 7G, and 7B, which are needed for discharge, in the space.

Although FIG. 1 exemplifies a structure of stripe-type barrier ribs 5 disposed in a direction parallel to the address electrodes 13, which is a γ-axis direction of the drawing, the barrier rib structure of the present invention is not limited thereto. According to the embodiment of the present invention, the barrier rib structure can be a closed-type barrier rib structure where the discharge space is independently closed and partitioned by the barrier ribs 5 disposed in parallel to the address electrodes 13 (i.e., the y-axis direction in the drawing) and barrier ribs (not shown) disposed in a direction crossing the barrier ribs 5 (i.e., the x-axis direction in the drawing) to thereby form the partitioned discharge spaces 7R, 7G, and 7B, or the barrier rib structure can be a closed-type barrier rib structure having the partitioned discharge spaces 7R, 7G, and 7B in the shape of a square, hexagon, or octagon.

The address electrodes 13 are often disposed on the rear substrate 3, and the present embodiment shows an example thereof. However, the present invention is not limited to this structure, and it includes structures where the address electrodes 13 are disposed in the front substrate 1 or the barrier ribs 5. The address electrodes 13 are covered with a second dielectric layer 15 to form wall charges in the partitioned discharge spaces 7R, 7G, and 7B and cause an address discharge, and the barrier ribs 5 are disposed on the second dielectric layer 15.

The display electrodes 9 and 11 are formed of sustain and scan electrodes 9 and 11 facing each other on both sides of the partitioned discharge spaces 7R, 7G, and 7B, on the front substrate 1. The present embodiment exemplifies a structure where the sustain and scan electrodes 9 and 11 are disposed on the front substrate 1. However, it can also have a structure where an inter-electrode (not shown) is additionally provided between the sustain and scan electrodes 9 and 11.

As illustrated in FIG. 1, the sustain and scan electrodes 9 and 11 can be respectively composed of transparent electrodes 9a and 11a and bus electrodes 9b and 11b, or they can be formed of only the transparent electrodes 9a and 11 a or the bus electrodes 9b and 11b. When the inter-electrode (not shown) is provided, it is desirable to form the inter-electrode of the same material as the sustain and scan electrodes 9 and 11 to simplify the manufacturing process. The transparent electrodes 9a and 11a can be formed as stripes stretching in a direction crossing the address electrodes 13, that is, the x-axis direction.

Also, the transparent electrodes 9a and 11a are where a surface discharge occurs in the partitioned discharge spaces 7R, 7G, and 7B. Since the transparent electrodes 9a and 11a occupy a considerable area of the discharge spaces 7R, 7G, and 7B, it is desirable to form them of a transparent material to minimize the blocking of visible light and to secure a high brightness. According to one embodiment, the transparent electrodes 9a and 11a are formed of Indium Tin Oxide (ITO).

The bus electrodes 9b and 11b secure electroconductivity of the transparent electrodes 9a and 11a by compensating for high resistance of the transparent electrodes 9a and 11a. Preferably, the bus electrodes 9b and 11b are formed of a metal having excellent electroconductivity, and more preferably they are formed of aluminum (A1). The bus electrodes 9b and 11b are formed in a stack structure on top of the transparent electrodes 9a and 11a disposed on the front substrate 1 in a direction crossing the address electrodes 13, which is the x-axis direction in the drawing. Also, since the bus electrodes 9b and 11b are formed of an opaque material, it is desirable to form the bus electrodes 9b and 11b at positions corresponding to the barrier ribs 5 with a width narrower than the width of the barrier ribs 5 to minimize the blocking of the visible light emitted in the discharge spaces 7R, 7G, and 7B.

The display electrodes 9 and 11 disposed as described above are covered with a first dielectric layer 17 to accumulate wall charges. The first dielectric layer 17 can be formed of a transparent dielectric substance to improve permeability of the visible light.

The first dielectric layer 17 includes carbon-based materials 21 grown from inside the first dielectric layer toward the discharge space to amplify electrons.

The carbon-based materials 21 can be grown out of the first dielectric layer 17.
The carbon-based materials 21 can be present in an amount of less than or equal to 40 wt%, 0.1 to 40 wt% and more preferably 5 to 30wt% based on the total weight of the first dielectric layer 21. Within the amount range of the carbon-based materials, brightness and efficiency are improved and sustain voltages decreased. Out of the amount range, electron amplification is negligible or is not economical.

The carbon-based materials 21 can be exposed to the discharge space to let secondary electrons easily separate into the discharge space. Accordingly, the carbon-based materials can be disposed on the entire surface of the first dielectric layer 17, or can be disposed on the first dielectric layer 17 in areas corresponding to areas where the display electrodes are disposed. The carbon-based materials can be disposed in a particular pattern on the first dielectric layer 17. Also, the carbon-based materials can be disposed in an upper dielectric layer and a lower dielectric layer of the first dielectric layer, which has a double layer structure.

The pattern of the carbon-based materials 21 can be obtained by patterning the first dielectric layer 17.

Referring to FIG. 3, the first dielectric layer 17 includes a third dielectric layer 17a and a fourth dielectric layer 17b. That is, the third dielectric layer 17a is disposed on the display electrodes 9 and 11, and the carbon-based materials 21 are grown from the third dielectric layer 17a. Then, the fourth dielectric layer 17b is disposed by patterning such that a portion of the carbon-based materials 21 are exposed. According to the pattern of the fourth dielectric layer 17b, the carbon-based materials 21 includes portions 21a that are covered with the fourth dielectric layer 17b, and other portions 21 b that are exposed from the fourth dielectric layer 17b through the opening pattern of the fourth dielectric layer 17b. As described above, the exposed portions 21b can be formed so as to correspond to end portions of the display electrodes 9 and 11 disposed closer to the centre of the discharge cell 7G in order to increase the emission amount of secondary electrons and to effect low-voltage driving. That is, the exposed portions 21b of the carbon-based materials 21 are disposed to correspond to end portions of the transparent electrodes 9a and 11a opposite to each other.

The carbon-based materials can be selected from the group consisting of carbon nanotubes, graphite nanofibers, carbon nanofibers, carbon nanotips, and diamonds, and preferably carbon nanotubes.

When the carbon-based materials have a high aspect ratio, the electric field is concentrated at the line end of the carbon-based materials. Thus, it can reduce the discharge voltage extremely well.

The carbon-based materials are coated with at least one material selected from the group consisting of fluorides, oxides, and combinations thereof. To be specific, the coating material is at least one selected from the group consisting of MgO, MgF₂, CaF₂, LiF, Al₂O₃, ZnO, CaO, SrO, SiO₂, La₂O₃, and combinations thereof.
The carbon-based materials do not hinder emission of visible light and addressing between the address electrodes 13 and any one electrode (typically, a scan electrode) among the sustain and scan electrodes 9 and 11. The carbon-based materials improve brightness by increasing the secondary electron emission to thereby improve a ratio between consumption power and brightness, that is, efficiency.

The flat panel display suggested in the embodiment of the present invention can further include at least one a protection layer 19 selected from the group consisting of fluoride layers, oxide layers, and combinations thereof, on the first dielectric layer 17. Preferably, the flat panel display can further include at least one layer of a protection layer 19 including at least one selected from the group consisting of MgO, MgF₂, CaF₂, LiF, Al₂O₃, ZnO, CaO, SrO, SiO₂, La₂O₃, and combinations thereof.

The protection layer 19 prevents the ions of separated atoms from colliding with and damaging the first dielectric layer 17, and it emits secondary electrons very well when the ions collide.

As described above, the carbon-based materials 21 are grown out of the protection layer 19 to be exposed to the discharge space.

The flat panel display suggested in the embodiment of the present invention can emit many secondary electrons while surface discharge occurs in the discharge space, when a voltage higher than a discharge initiation voltage is supplied to the space between the scan electrode and the sustain electrode disposed in parallel to each other in a direction crossing the address electrodes. This signifies that a large amount of plasma discharge occurs in the discharge space, as the voltage is supplied between the scan electrode and the sustain electrode. This also means that a discharge gas injected into the discharge space is ionized to a greater degree at the same supplied voltage. Thus, more ultra-violet rays are emitted from the discharge space, and since the ultra-violet rays excite the phosphor layer, more light is emitted from the phosphor layer than in the conventional technologies. Therefore, brightness of images is improved remarkably.

The flat panel display suggested in the present embodiment can be a plasma display panel (PDP).

According to another embodiment of the present invention, a method of manufacturing a flat panel display is provided, which includes a) forming display electrodes on a first substrate, b) coating a composition for a dielectric layer and then preheating to form a first dielectric layer covering the display electrodes on the first substrate, c) growing a carbon-based material toward a discharge space on the first dielectric layer and then firing, d) forming address electrodes on a second substrate, e) forming a second dielectric layer covering the address electrodes on the second substrate, and forming barrier ribs for partitioning a discharge space to thereby form partitioned discharge spaces on the second dielectric layer between the address electrodes, f) forming a phosphor layer in the partitioned discharge spaces, and g) facing the first substrate and the second substrate to each other, exhausting air therebetween, and sealing them together.

Except for the method of forming the dielectric layer and a method of planting carbon-based materials, since the flat panel display manufacturing method is widely known and understandable to those skilled in the art of the present invention, a detailed description thereof has not been provided herein. The embodiment, however, only exemplifies the present invention, and the present invention is not limited to the embodiment.

First, the display electrodes that are formed of a transparent electrode and a bus electrode are disposed on the first substrate, and then the first dielectric layer is formed on the display electrodes using a composition for forming a dielectric layer followed by preheating.

The composition for forming a dielectric layer includes materials generally used in a dielectric layer. Specifically, a glass material, such as lead oxide or bismuth oxide, can be used. In order to increase whiteness of a dielectric layer, white-coloured ceramic material, such as alumina or titania, can be used along with the glass material.

The first dielectric layer can be formed by printing a composition for forming a dielectric layer on the first substrate, or by laminating a dielectric layer film on the first substrate using a dry film method.

The first dielectric layer is subjected to preheating at 430 to 480°C, and preferably 450 to 480°C. By the preheating, micropores for fixing carbon-based materials are formed in the first dielectric layer. When the preheating temperature is less than 430°C, an average diameter of the micropores in the dielectric layer is too large to fix carbon-based materials. When the preheating temperature is more than 480°C, planting efficiency of carbon-based materials decreases.

Then, carbon-based materials are grown from the micropores of the first dielectric layer toward the discharge space and then fired.

According to one embodiment of the present invention, the carbon-based materials are grown using a planting method. The carbon-based materials can be planted in the entire surface of the first dielectric layer or in areas corresponding to where the display electrodes are disposed.

The kinds of the carbon-based materials and use amount are the same as described above.

The planting process can be carried out by a conventional method. Preferably, the planting is performed on the first dielectric layer by spraying the carbon-based materials or dripping the carbon-based materials with a pipette. The planting process is not limited to a specific temperature or time. However, according to one embodiment, the carbon-based materials is included in an amount of 40 wt% or less, preferably 0.1 to 40 wt%, and more preferably 5 to 30 wt% based on the total weight of the first dielectric layer.

The firing is performed at a temperature of 520 to 600°C, and preferably 520 to 580°C. When the firing temperature is less than 520°C, the dielectric layer is not thoroughly fired, whereas when it is more 600°C, the carbon-based materials can be burned. The firing process can be performed under an oxygen atmosphere.

The carbon-based materials are grown from the micropores formed by preheating the first dielectric layer, growing the carbon-based materials toward the discharge space and then fixing the dielectric layer and carbon-based materials by the subsequent firing.

The first substrate made as above and a second substrate made in accordance with a conventional method are assembled followed by exhausting air between the first and second substrates, and sealing them together to manufacture a flat panel display.
It is possible to additionally form at least one protection layer selected from the group consisting of fluoride layers, oxide layers, and combinations thereof on the first dielectric layer.

To be specific, the protection layer can include at least one layer selected from the group consisting of fluoride layers including MgF₂, CaF₂, and LiF, and oxide layers including MgO, Al₂O₃, ZnO, CaO, SrO, SiO₂, and La₂O₃.

The protection layer forming method is not specifically limited. It can be formed by a thick layer printing method using paste, or by a plasma deposition method. Among them, the deposition method is preferred because it is relatively strong against sputtering based on ion impact, and it can reduce the discharge initiating voltage and the discharge sustain voltage by the emission of secondary electrons.

The method of forming the protection layer in the plasma deposition method includes magnetron sputtering, electron beam deposition, Ion Beam Assisted Deposition (IBAD), Chemical Vapour Deposition (CVD), a sol-gel method, and ion plating. The ion plating is a method that forms a layer by ionizing vaporized particles. The ion plating has similar characteristics to the sputtering with respect to adherence and crystallization of the protection layer, but it has an advantage that it can perform deposition at a high speed of 8 nm/s. Among the methods for forming the protection layer, it is preferred to use electron beam deposition.

When the flat panel display including carbon-based materials in the discharge space is used, it is possible to increase an electron density in the discharge space by raising a secondary electron emission coefficient of ions inside the flat panel display and easily providing electrons required for glow discharge, and to improve discharge characteristics and brightness characteristics remarkably by changing a discharge mode. The following examples illustrate the present invention in more detail. However, it is understood that the present invention is not limited by these examples.

### Example 1

Indium Tin Oxide was sputtered on a front substrate of a soda lime glass followed by laminating a Dry Film Resist (DFR). A patterned photo-mask was laminated on the DFR and then exposed to a high pressure mercury lamp, developed using an 0.4% Na₂CO₃ alkali aqueous solution and then dried to fabricate patterned transparent electrodes. Subsequently, etching was performed using hydrochloric acid and nitric acid and DFR patterns were removed using a 5.0% NaOH aqueous solution followed by firing to fabricate transparent electrodes. A silver (Ag)-containing paste for forming photosensitive bus electrodes was coated on the transparent electrodes. The coated silver (Ag)-containing paste was leveled and exposed to a DI (direct imaging) exposer. The drying and exposing processes were repeated five times or more and then development was performed using a 0.4% Na₂CO₃ alkali aqueous solution followed by firing to form stripe-shaped bus electrodes. Thus, display electrode including transparent electrodes and bus electrodes were fabricated.

Subsequently, the entire surface of the front substrate including the display electrodes was coated with a dielectric composition that was composed of 28.4 wt% SiO₂, 69.8 wt% PbO, and 1.8 wt% B₂O₃ and fired at 400°C to thereby form micropores in a first dielectric layer. On the first dielectric layer, carbon nanotubes were planted, and then preheated at 550°C under an oxygen atmosphere.

The resultant structure was put into a protection layer deposition chamber, and a protection layer including MgO was deposited in an ion plating method to thereby complete the formation of a front substrate. The protection layer deposition chamber was controlled to have a regular pressure level of 1 × 10⁻⁴Pa and an operation pressure level of 5.3×10⁻²Pa during the deposition. The protection layer deposition chamber sustained the substrate at 200±5°C by supplying oxygen at 100 seem.

Subsequently, address electrodes, a second dielectric layer, barrier ribs, and a phosphor layer were disposed on a second substrate. Then, the second substrate was brought to face the first substrate and the air was exhausted out of a discharge space therebetween. A discharge gas was injected into the discharge space at 400 Torr to thereby form a Plasma Display Panel (PDP).

### Example 2

A plasma display panel was manufactured in the same method as the Example 1, except that preheating was performed at 410°C.

### Example 3

A plasma display panel was manufactured in the same method as the Example 1, except that preheating was performed at 420°C.

### Example 4

A plasma display panel was manufactured in the same method as the Example 1, except that preheating was performed at 440°C.

### Comparative Example 1: manufacturing a Plasma Display Panel (PDP)

Indium Tin Oxide was sputtered on a front substrate of a soda lime glass followed by laminating a Dry Film Resist (DFR). A patterned photo-mask was laminated on the DFR and then exposed to a high pressure mercury lamp, developed using an 0.4% Na₂CO₃ alkali aqueous solution and then dried to fabricate patterned transparent electrodes. Subsequently, etching was performed using hydrochloric acid and nitric acid and DFR patterns were removed using a 5.0% NaOH aqueous solution followed by firing to fabricate transparent electrodes. A silver (Ag)-containing paste for forming photosensitive bus electrodes was coated on the transparent electrodes. The coated silver (Ag)-containing paste was leveled and exposed to a DI (direct imaging) exposer. The drying and exposing processes were repeated five times or more and then development was performed using a 0.4% Na₂CO₃ alkali aqueous solution followed by firing to form stripe-shaped bus electrodes. Thus, display electrode including transparent electrodes and bus electrodes were fabricated. Subsequently, the entire surface of the front substrate including the display electrodes was coated with a dielectric composition that was composed of 28.4 wt% SiO₂, 69.8 wt% PbO, and 1.8 wt% B₂O₃ and fired at 550°C under an oxygen atmosphere to thereby form a first dielectric layer. On the first dielectric layer, carbon nanotubes were planted.

The resultant structure was put into a protection layer deposition chamber, and a protection layer including MgO was deposited in an ion plating method to thereby complete the formation of a front substrate. The protection layer deposition chamber was controlled to have a regular pressure level of 1 × 10⁻⁴Pa and an operation pressure level of 5.3×10⁻²Pa during the deposition. The protection layer deposition chamber sustained the substrate at 200±5°C by supplying oxygen at 100 sccm.

Subsequently, address electrodes, a second dielectric layer, barrier ribs, and a phosphor layer were disposed on a second substrate. Then, the second substrate was brought to face the first substrate and the air was exhausted out of a discharge space therebetween. A discharge gas was injected into the discharge space at 400 Torr to thereby form a plasma display panel (PDP).

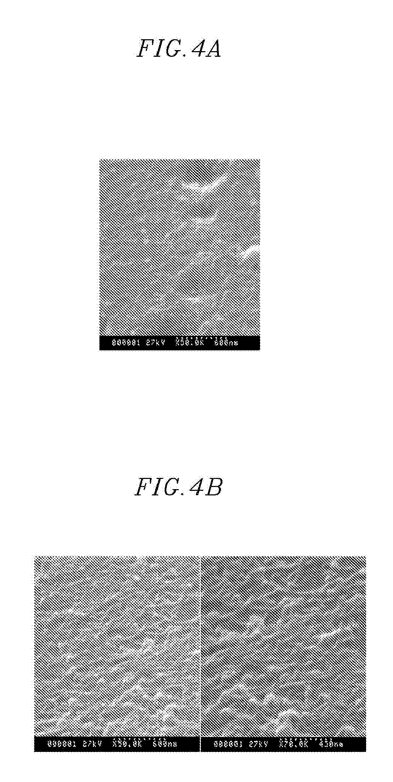

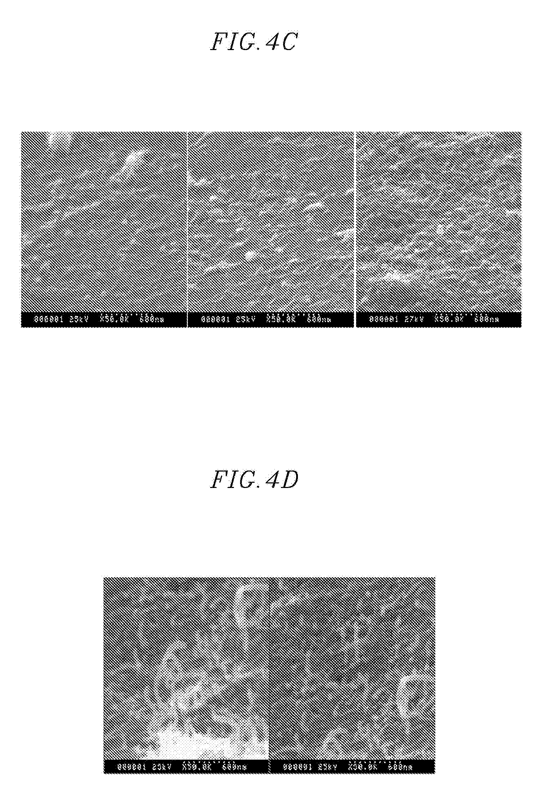

The carbon nanotubes planted on the first dielectric layers of plasma display panels (PDPs) according to Examples 1 to 4 were measured using a Scanning Electron Microscope (SEM). The results are shown in FIGS. 4A to 4D.

FIGS. 4A to 4D are respectively SEM photographs showing carbon nanotubes on the first dielectric layer of plasma display panels (PDPs) according to Examples 1 to 4.

As shown in FIGS. 4A to 4D, the carbon nanotubes according to Example 4 where preheating was performed at 440°C were planted best.

In the flat panel display according to one embodiment of the present invention, an electron density in the discharge space can be increased by raising a secondary electron emission coefficient of ions inside of the flat panel display and easily providing electrons required for glow discharge, and to improve discharge characteristics and brightness characteristics remarkably by changing a discharge mode.

While this invention has been described in connection with what is presently considered to be practical exemplary embodiments, it is to be understood that the present invention is not limited to the disclosed embodiments, but, on the contrary, is intended to cover various modifications and equivalent arrangements included within the scope of the appended claims.

## Claims

1. A flat panel display, comprising:
a first substrate and a second substrate arranged opposite to each other;
barrier ribs arranged in a space between the first substrate and the second substrate and dividing a discharge space to define partitioned discharge spaces;
a phosphor layer arranged inside the partitioned discharge spaces;
a plurality of display electrodes arranged on the first substrate;
a dielectric layer arranged to cover the display electrodes on the first substrate; and
a carbon-based material arranged to extend from the dielectric layer towards the discharge space.

2. The flat panel display of claim 1, further comprising a plurality of address electrodes arranged in a direction that crosses a direction in which the display electrodes are arranged.

3. The flat panel display of claim 1 or 2, wherein the carbon-based material is included in an amount of less than or equal to 40 wt% based on the total weight of the dielectric layer.

4. The flat panel display of claim 1, 2 or 3, wherein the carbon-based material is arranged on an entire surface of the dielectric layer.

5. The flat panel display of claim 1, 2 or 3, wherein the carbon-based material is arranged on the dielectric layer in areas corresponding to areas where the display electrodes are arranged.

6. The flat panel display of any one of the preceding claims, wherein the carbon-based material is arranged to extend out of the dielectric layer.

7. The flat panel display of claim 6, wherein the carbon-based material is grown to extend from the dielectric layer toward the discharge space using a planting method.

8. The flat panel display of any one of the preceding claims, wherein the carbon-based material is selected from a group consisting of carbon nanotubes, graphite nanofibers, carbon nanofibers, carbon nanotips, diamonds, and combinations thereof.

9. The flat panel display of any one of the preceding claims, wherein the carbon-based material has a coating of at least one material selected from a group consisting of fluorides, oxides, and combinations thereof.

10. The flat panel display of claim 1, further comprising at least one protection layer arranged on the dielectric layer, the at least one protection layer selected from a group consisting of fluoride layers, oxide layers, and combinations thereof.

11. The flat panel display of claim 10, wherein the carbon-based material is arranged to extend out of the protection layer.

12. The flat panel display of claim 10 or 11, wherein the protection layer comprises at least one material selected from a group consisting of MgO, MgF₂, CaF₂, LiF, Al₂O₃, ZnO, CaO, SrO, SiO₂, La₂O₃, and combinations thereof.

13. The flat panel display of any one of the preceding claims, comprising a plasma display panel (PDP).

14. A method of manufacturing a flat panel display, the flat panel display having a first substrate and a second substrate arranged opposite to each other, barrier ribs arranged in a space between the first substrate and the second substrate and dividing a discharge space to define partitioned discharge spaces and a phosphor layer arranged inside the partitioned discharge spaces, the method comprising
forming display electrodes on the first substrate;
coating with a composition for a dielectric layer and then preheating to form a dielectric layer covering the display electrodes on the first substrate;
growing a carbon-based material toward a discharge space on the dielectric layer and then firing the first substrate.

15. The method of claim 14, wherein the preheating is performed in a range of from 430 to 480°C.

16. The method of claim 14 or 15, comprising using a planting method to grow the carbon-based material from the dielectric layer to extend toward the discharge space.

17. The method of claim 13, 14 or 15 wherein the firing is performed in a range of from 520 to 600°C.

18. The method of any one of claims 13 to 17, wherein the firing is performed in an oxygen atmosphere.

19. The method of any one of claims 13 to 18, further comprising forming at least one a protection layer on the dielectric layer, the at least one a protection layer selected from a group consisting of fluoride layers, oxide layers, and combinations thereof.
